# EUROPEAN PATENT SPECIFICATION

(11) **EP 2 191 634 B1**
(45) Date of publication and mention of the grant of the patent: **15.01.2014**
(21) Application number: 08841671.4
(22) Date of filing: 20.10.2008
(51) Int. Cl.: H04L 29/12

(54) **A SYSTEM AND METHOD FOR GENERATING FUNCTIONAL ADDRESSES**
SYSTEM UND VERFAHREN ZUR ERZEUGUNG FUNKTIONALER ADRESSEN
SYSTÈME ET PROCÉDÉ POUR GÉNÉRER DES ADRESSES FONCTIONNELLES

(30) Priority: 24.10.2007 US 923268
(43) Date of publication of application: 02.06.2010
(73) Proprietor: Telefonaktiebolaget LM Ericsson (publ), 164 83 Stockholm (SE)
(72) Inventor: ANDERSSON, Per, Montreal Québec H2Y 1Y8 (CA); MALOY, Jon, Montreal Québec H1G 4J3 (CA); KRISHNAN, Suresh, Montreal Québec H3C 6S3 (CA)
(74) Representative: HOFFMANN EITLE
(86) International application number: PCT/IB2008/054310
(87) International publication number: WO 2009/053894

(56) References cited:
- EP-A- 1 681 895
- WO-A-2006/100620
- US-A1- 2005 068 950
- MALOY ERICSSON S BLAKE MODULARNET M KONING WINDRIVER J HADI SALIM ZNYX H KHOSRAVI INTEL J: "TIPC: Transparent Inter Process Communication Protocol, a Layer 2 TML for the ForCES protocol; draft-maloy-tipc-01.txt", 20041027, no. 1, 27 October 2004 (2004-10-27), XP015032005, ISSN: 0000-0004

## Description

### Technical Field

The present invention relates generally to addressing schemes for communication networks, and particularly to functional addressing schemes for routing data packets through communication networks.

### Background

The vast majority of communication protocols employ location-based addressing schemes to route data packets through a communication network. For example, both public and private computer networks use Internet Protocol (IP) addresses to route packets of data. IP addresses are useful for routing data packets to a specific network device; however, they only contain information that identifies the network device based on its location in the network. IP addresses provide no information about the functional capabilities of the networked devices.

The use of location-based addresses is helpful, but not as efficient as it could be. Particularly, conventional protocols allow the application clients to handle only logical identifiers, such as Uniform Resource Locators (URLs), and require the network to translate these logical identifiers to location-based identifiers. However, this requires translation tables to be distributed throughout the network, which must be updated with new information as networked devices are added or removed to and from service. One example of such a translation table is the Global Title Translation (GTT) tables used in Signaling System #7 (SS7). The Dynamic Name Service (DNS) is another example.

Although useful, location-based addressing schemes carry information that defines where a networked device is located in the network. However, it does not carry information that could indicate the functional capabilities of that networked device.

The Internet-Draft "TIPC: Transparent Inter Process Communication Protocol, a Layer 2 TML for the ForCES protocol" by J. Maloy at al., XP015032005 describes a protocol TIPC that is designed to be used as a Transport Mapping Layer (TML) for the ForCES protocol when that protocol is transported over L2 carriers such as Ethernet, RapidIO or PCI-Express. TIPC is seen as a layer between the TIPC user, the ForCES protocol and a packet transport service such as Ethernet, ATM, DCCP, TCP or SCTP. One of the functionalities of TIPC is to provide address translation from a functional to a physical address.

### Summary

The present invention sends data packets over a communication network using directly addressable destination addresses. The destination addresses provide information about the location of devices in the network, and about the services that are hosted by those devices.

More particularly, the communication network includes one or more networked devices, each of which may host one or more services and instances of those services. The communication network also uses a conventional addressing scheme, such as an Internet Protocol (IP) or a Media Access Control (MAC) addressing scheme, to route data packets. To map functional information onto these addresses, a network operator

partitions an address space into a plurality of address subspaces based on the services hosted by the networked devices. The network operator then maps these services onto destination addresses within each address subspace. The resulting destination addresses are formatted according to a conventional addressing scheme, but provide location information about the networked devices, as well as information about the functional topology of the network.

In one embodiment, a computing device on the network includes an application that generates data packets for a service hosted by another networked device. When generating the data packets, the computing device generates a functional indicator and an instance indicator. The functional indicator identifies the target service hosted by another networked device, and the instance indicator identifies an instance of that service. The application assembles the destination address using the functional and instance identifiers, and inserts the destination address into the data packet. The application then sends the data packet over the network to the destination address.

### Brief Description of the Drawings

Figure 1 illustrates a directly addressable destination address generated according to one embodiment of the present invention.

Figure 2 illustrates an address space partitioned according to one embodiment of the present invention

Figure 3 illustrates a directly addressable destination address generated according to another embodiment of the present invention.

Figure 4 is a block diagram illustrating how a communication network might route data packets having the directly addressable destination addresses generated according to one embodiment of the present invention.

Figure 5 is a flow diagram illustrating a method of generating directly addressable destination addresses for data packets according to one embodiment of the present invention.

Figure 6 is a block diagram illustrating some of the components of a networked device suitable for use with one embodiment of the present invention.

### Detailed Description

The present invention provides a method of sending data packets over a communication network. The communication network may use a conventional addressing scheme, such as IP addresses, to route data packets through the network. The IP address conventionally identifies the location of devices connected to the network, but does not provide any information about the functions or services provided by the networked devices. The present invention provides a method of mapping the function of networked devices onto IP addresses within a given address space. As described in more detail below, various functions or instances of a function can be mapped onto specific bits or bytes of an IP address. Thus, the IP address can be generated to provide location information about the networked devices and information about the functional topology of the network. The present invention can be practiced when a network administrator or network designer can freely manipulate at least part of the address space.

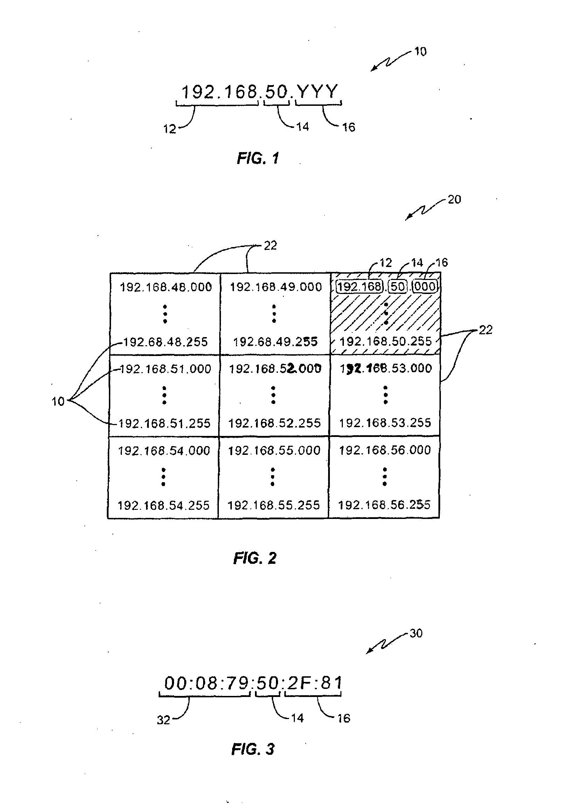

Figure 1 illustrates how functional topology information may be mapped onto a conventional IPv4 address 10 according to one embodiment of the present invention. The first and second bytes of IP address 10 comprise a network prefix 12, which in Figure 1 is "192.168." The bytes that make up the network prefix 12 are fixed values that indicate the network ID and the subnet ID, as is conventional. By "fixed," it is meant that the network operator or network designer is not free to manipulate those values. The network operators are free, however, to manipulate the third and fourth bytes of IP address 10.

In this embodiment, the third byte of IP address 10 is used as a functional indicator 14 to identify a function or service associated with a networked device. For example, the networked device may function as an SMTP server for email, an HTTP server, a domain name server, or the like. Each of these services would have a different value for the functional indicator 14. The value for the functional indicator 14 of Figure 1 is "50;" however, this value is not "fixed." When using an IPv4 addressing scheme, the functional indicator 14 may be any value between 0 and 255 depending upon the service. This allows network designers or operators to identify up to 256 different functions or services.

Similarly, the fourth byte of IP address 10 is used as an instance indicator 16 to identify a particular instance of a service. In particular, the network may have multiple instances of a given function or service. The multiple service instances may be hosted by a single networked device, or may be hosted by several networked devices. Thus, the instance indicator 16 would identify which particular instance of a service the data packet is to be routed. As an example, Figure 1 shows the instance indicator 16 generically as "YYY." Like the functional indicator 14, the instance indicator 16 may be any value between 0 and 255 using an IPv4 formal. Therefore, network operators may identify up to 256 instances for each service identified by the functional indicator 14.

Although the embodiment of Figure 1 uses a full byte to identify a function and another full byte to identify an instance of that function, those skilled in the art will appreciate that other allocations between function and instance are possible. In another embodiment, for example, the four most significant bits of the third byte are used to indicate the function, while the least significant bits of the third byte and the entire fourth byte are used to indicate the instance of that function. This allocation would allow for mapping a fewer number of services, but would permit the mapping of more than 256 instances of a given service. In another embodiment, a network operator may use all available bytes of IP address 10 to indicate a function and an instance. Other divisions of the bytes in IP address 10 to indicate the function and instance are also possible.

In practice, the network administrator or network designer assigns IP addresses such that networked devices performing a common function use IP addresses with the same functional indicator 14, but with different instance indicators 16. For example, Figure 2 illustrates an address space 20 that the network designer is free to manipulate. In this embodiment, the network designer partitions the address space 20 into a plurality of address subspaces 22. The network designer then associates each address subspace 22 with a function, or alternatively, associates each function with an address subspace 22. The network designer then assigns IP addresses 10 within each address subspace 22 to instances of the corresponding function.

As seen in Figure 2, each address subspace 22 may contain up to 256 different IP addresses 10. Each IP address 10 identifies a service executing instance on a networked device. Each IP address 10 includes a network prefix 12 of "192.68" to indicate the network ID and the subnet ID. As previously stated, this portion of the IP address 10 is fixed in this embodiment and carries the location-based information. Each address subspace 22 is also associated with a different function, which is identified by functional indicator 14. Here, the shaded address subspace 22 has an IP address 10 with a functional indicator 14 of "50." Other address subspaces 22 are associated with different functions or services and, thus, have different functional indicators 14. Finally, the IP address 10 in each address subspace 22 may have up to 256 instances of each function, each instance would be identified using a different instance indicator 16 numbered between 0 and 255.

By allocating the IP addresses 10 to networked devices in this manner, the network designer can eliminate the need to use logical identifiers and, in some cases, eliminate the need to maintain translation tables for translating the logical identifiers into corresponding conventional IP addresses. Instead, applications on networked devices can use an IP address 10 to directly address other applications and services executing on other networked devices based on the function to be performed.

Although Figures 1 and 2 illustrate the present invention using IPv4 addresses, those skilled in the art should appreciate that other addressing schemes are also well suited for the present invention. Further, the number of "freely-manipulatable bytes" will vary, depending on the addressing scheme. For example, with an IPv4 addresses shown above, the network designer could have the freedom to manipulate 1-3 bytes of the address, and thus, use these bytes to carry the functional and instance indicators 14, 16. In other embodiments, however, the network designer may use an IPv6 address for the functional addressing scheme. With an IPv6 protocol, the network designer could be free to manipulate a selected plurality of bytes, and use the IPv6 address to carry the functional and instance indicators 14, 16.

Figure 3 illustrates another embodiment of a directly addressable destination address. Particularly, a network designer may manipulate a Media Access Control (MAC) address to include the functional and instance indicators 14, 16.

As is known in the art, MAC addresses are hardware addresses. They are normally associated with a particular network adaptor or network interface card (NIC) in a networked device, and have no relation to the physical location of the adaptor in the network. Usually, a manufacturer will define the MAC addresses for their particular devices; however, network designers will also have control over at least some of this address space. As with the IP addresses 10 above, network designers may use this freedom to manipulate at least part of the MAC addresses to better suit the needs of their particular network.

Figure 3 illustrates a 48-bit MAC address 30 comprising six bytes. The first three bytes are a "fixed" prefix 32, which in this case are "00:08:79." The prefix 32 may define the manufacturer of the networked device that hosts the service instance, or it may be a predetermined value assigned by the network designer. The fourth byte in MAC address 30 (i.e., "50") is used as the functional indicator 14 to indicate the service. The fifth and sixth bytes in MAC address 30 (i.e., "2F:81 ") are used as the instance indicator 16. As above, the present invention does not confine the functional and instance indicators 14, 16 to byte-boundaries, and other allocations of the bits in MAC address 30 to indicate the function and instance are also possible. For example, the network operator may be free to manipulate all of the available bits of MAC address 30 to define the prefix 32, the functional indicator 14, and the instance indicator 16.

In operation, the network designer may partition an available part of the MAC address space in a manner similar to that stated above for Figure 2. Particularly, the network operator may divide the MAC address space into a plurality of address subspaces, and associate a function with each address subspace. The network designer may then assign a MAC address 30 to each instance of the function in the address subspace.

With the present invention, an application hosted by a networked device can send data packets to functions on other networked devices based on a service that is associated with the data packets. By way of example, a packet generated by a browser application would be sent to an HTTP service instance hosted by an HTTP server. Likewise, while a packet generated by an email client may be sent to an SMTP service instance hosted by an SMTP server. Addressing data packets for delivery to services as is done by the present invention deviates from prior art systems that rely on location-based addressing schemes to route their data packets. Particularly, conventional schemes provide only location information about their networked devices. However, the addressing scheme of the present invention also provides information about the functional topology of the network.

In practice, an application executing on a networked device would generate the directly addressable destination address for a data packet. In one embodiment, this is accomplished by determining the network prefix, such as prefix 12 or prefix 32, and appending the functional indicator 14 and the instance indicator 16 to the prefix. Once assembled, the application would insert the destination address into each data packet and send it over the network to that destination address. This avoids the need for creating and maintaining translation tables and distributing them throughout the network.

An application may generate the components of the destination address in any of a number of ways. For example, the network prefix is a value known *a priori* to the application generating the data packets. It may be hard-coded into the application, or it may be stored in memory and made available to the application. In some embodiments, the prefix comprises a fixed value that identifies the manufacturer of the networked device. In other embodiments, the prefix comprises a predetermined value assigned by the network designer. The application generating the destination address need only populate the destination address with this value.

Similarly, the application may create the functional indicator 14 from a predefined constant value. For example, if the value "50" were to identify data packets destined for an HTTP server, the application creating those packets (e.g., a browser) would simply append a "50" onto the network prefix for each data packet. In other embodiments, the application might monitor a port or socket over which the data packets are sent, and use that ID as the functional indicator 14. For example, if all HTTP packets are sent over socket "80," the application may use the value "80" as the functional indicator 14. Where a MAC address 30 is used, the application might convert the socket ID to a hexadecimal number (i.e., "50"), and use that hexadecimal equivalent as the functional indicator 14. In some embodiments, the application could maintain a table of different functions - each identified by a different predetermined value - and select a value for the functional indicator 14 from the table based on the type of data packet that it is generating.

There are also a variety of different ways in which the application may create the instance indicator 16. In one embodiment, the application uses its own host ID. Where MAC addressing is used, the applications may first convert the host ID values to hexadecimal values and append those to the destination address. In other embodiments, the application hashes its host ID, or a part or all of a data field, such as a character string, message content, or IP address, such as the source or destination IP address. In some embodiments, the application may hash any of the information contained in the Layer 2 - Layer 4 fields of the data packet once the functional indicator 14 has been determined. Regardless of the method used, the resultant hash value, which is typically bounded within a range of values, is then appended as the instance indicator 16. In some cases, the application may employ an algorithm to randomly generate or select a value from a range of values. Assuming a random distribution, generating the destination addresses for the data packets in this manner may help to balance a network load.

Additionally, the application may dynamically select a method by which to generate the instance indicator 16. Selection may be based, for example, on current or expected load conditions, or on parameters entered by a network operator. In some cases, the network operator may specify one or more of the parameters used to generate the instance indicator 16, or introduce new or modified methods of generating the instance indicator 16. There are any number of ways to accomplish this function, but in one embodiment, the parameters and/or the generating method is described in an eXtended Markup Language (XML) file. The network operator places this file on the network such that the application generating the instance indicator can access that file.

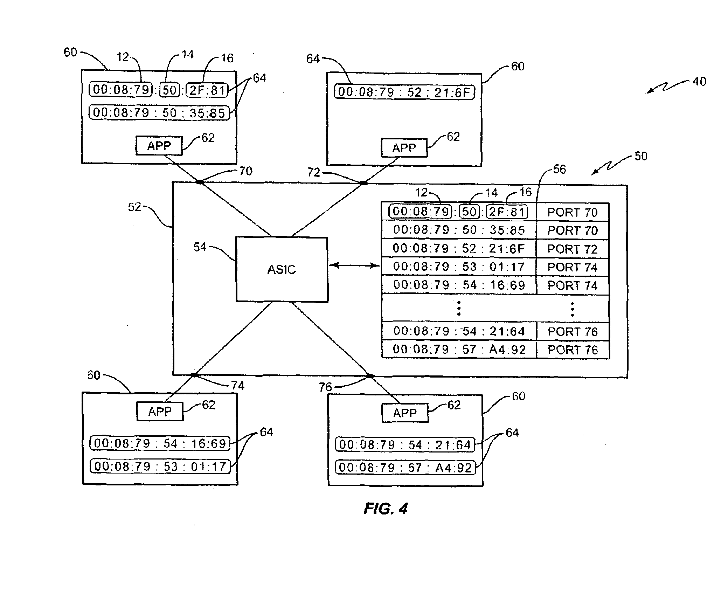

Figure 4 illustrates one way in which a network may route data packets using MAC addresses formed according to the present invention. Figure 4 depicts a local area network (LAN) 40 having a network infrastructure 50 that interconnects a plurality of networked devices 60. LAN 40 may be, for example, an Ethernet network. As is known in the art, Ethernet networks are widely available and transport data at a variety of different speeds. Some Ethernet networks may communicate data packets at 100 Mbits/second while others transport data at 1 Gbit/second or more. However, neither the particular type of network, nor the speed of the network, matters to the present invention. Those skilled in the art should appreciate that the present invention will function with any type of communication network, and that the characterization of LAN 40 as an Ethernet network is for illustrative purposes only.

The network infrastructure 50 includes the hardware and software components necessary to send packets of data to and from each of the networked devices 60. In this embodiment, the network infrastructure 50 includes a Layer 2 switch 52, although other types of switches are suitable for use with the present invention. Switch 52 operates at the Media Access Control (MAC) sub-layer of the data link layer, and comprises an Application Specific Integrated Circuit (ASIC) 54 and a binding table 56. Each of the networked devices 60 connects to switch 52 via a respective physical port 70, 72, 74, 76.

As stated above, each networked device 60 hosts one or more instances of a service 64. For example, the services 64 may comprise one or more instances of a function such as an HTTP service, an SMTP service, or the like. Each instance of each service is identified using a directly addressable destination address, which in this embodiment, comprises the MAC address 30 previously described. The address of each service has a prefix 32, a functional indicator 14, and an instance indicator 16.

Additionally, each networked device 60 comprises an application 62. The applications may be, for example, web browsers, mail clients, or the like, that will communicate data packets with the various services 64 hosted by the networked devices 60. According to the present invention, the applications 62 generate a functional destination address for each data packet and send the packet to switch 50. Upon receipt, the switch 50 receives the data packets and, based on their destination addresses, sends the packet to the corresponding physical port.

Particularly, ASIC 54 inspects the data packets when they arrive from an application 64 to determine the MAC address 30. For example, ASIC 54 may inspect the header of the incoming data packet to determine the associated MAC address 30. ASIC 54 then compares the received MAC address 30 to the information stored in the binding table 56 to determine where to route the data packet. In this embodiment, binding table 56 maps MAC addresses 30 to a corresponding physical port number 70, 72, 74, 76. If a match is found, ASIC 54 determines the corresponding physical port, and sends the data packet to that port. If no match is found, the data packet may be dropped, or the switch 52 may send the data packet to a default port.

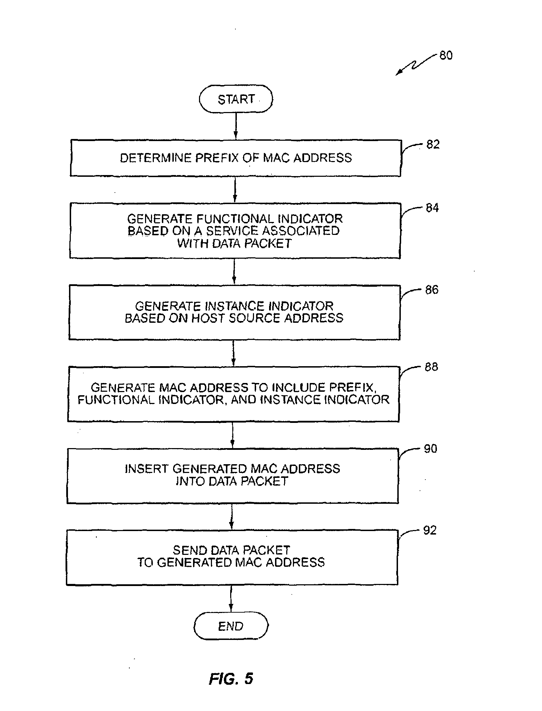

Figure 5 is a flow chart that illustrates a method 80 by which the applications 62, generate the functional addresses. For purposes of clarity only, Figure 5 illustrates method 80 as generating a MAC address 30; however, it should be understood that method 80 may be used to generate other types of addresses as well.

Method 80 begins when an application 62 determines the network prefix for MAC address 30 (box 82). The application 62 then generates the functional indicator 14 based on the service associated with the data packet (box 84), and the instance indicator 16 (box 86). In this embodiment, the instance indicator 16 is generated based on the host source ID; however, as previously stated, the present invention is not limited solely to this method. Those skilled in the art will readily appreciate that there are other ways by which to generate the instance indicator 16. Once application 56 has generated the functional indicator 14 and the instance indicator 14, it assembles the MAC address 30 for the data packet (box 88). Application 62 then inserts the MAC address 30 into the data packet (box 90), and sends the data packet to that address via the infrastructure 50 (box 92). Switch 52 receives the data packet, inspects the header, and sends the data packet to the particular service instance identified by the MAC address 30.

Using MAC addresses 30 and a Layer 2 switch as in the previous embodiment is advantageous. For example, MAC addresses are divorced from any location information related to the networked devices 60. Further, Layer 2 switches generally include the capability to discover new or changed MAC addresses whenever networked devices are added to or removed from the network. Particularly, ASIC 54 may periodically query the networked devices 60 to determine their assigned MAC addresses 30. Thus, whenever a networked device is brought into or out of service, ASIC 54 can quickly discover or "learn" the MAC address 30 and about the services and instances thereon, and update the binding table 56 to reflect the changes accordingly. These updates are autonomous, and there is no need to distribute the changes throughout the network.

However, using MAC addresses 30 as in the previous embodiments is not required for the present invention to operate. Other embodiments, for example, may generate the full address at the host device.

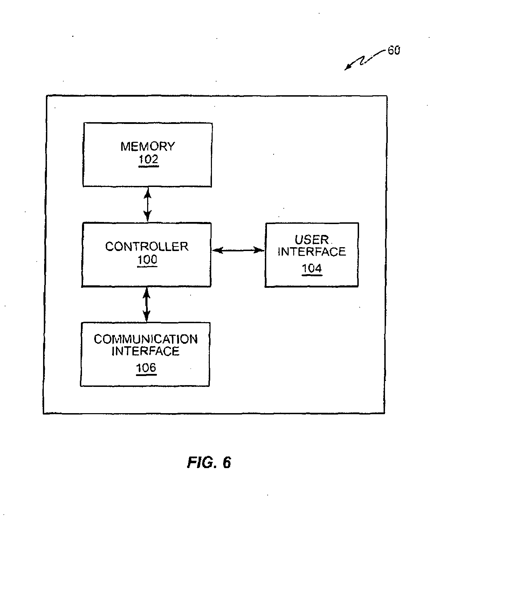

Figure 6 illustrates some of the components of an exemplary networked device 60. Networked device 60 may be a computing device, such as a server, that is capable of executing application 62 and services 64, as well as communicating data to other networked devices via the infrastructure 50. To accomplish this, networked device 60 typically comprises a controller 100, a memory 102, a user interface 104, and a communication interface 106. Controller 100 controls the functionality of networked device 60 according to programs and data stored in memory 102. This includes, but is not limited to, applications 62 and multiple instances of service 64. The User Interface (UI) 104 comprises, *inter alia,* a display (not shown) and a keyboard (not shown) to allow a user to enter commands and otherwise interact with device 60. The communication interface 106 may be, for example, an Ethernet interface that communicatively connects the networked device to one of the physical ports 70, 72, 74, or 76 on switch 52. The communication interface 106 allows the device 60 to communicate data packets with other networked devices.

The present invention may, of course, be carried out in other ways than those specifically set forth herein without departing from essential characteristics of the invention. Therefore, the present embodiments are to be considered in all respects as illustrative and not restrictive, and all changes coming within the meaning and equivalency range of the appended claims are intended to be embraced therein.

## Claims

1. A method of sending data packets over a communication network, the method comprising:
- generating (84) a functional indicator to identify a service,
- generating (86) an instance indicator to identify an instance of the service,
- generating a destination address that is an Internet Protocol, IP, address (10) comprising the functional indicator and the instance indicator, wherein the generated destination address provides location information for a networked device executing the service;
- inserting (90) the destination address into a data packet; and
- sending (92) the data packet towards the networked device by use of the generated destination address.

2. A method of sending data packets over a communication network, the method comprising:
- generating (84) a functional indicator to identify a service,
- generating (86) an instance indicator to identify an instance of the service,
- generating (88) a destination address that is a Media Access Control, MAC, address (30) comprising the functional indicator and the instance indicator, wherein the generated destination address provides location information for a networked device executing the service;
- inserting (90) the destination address into a data packet; and
- sending (92) the data packet towards the networked device by use of the generated destination address.

3. The method of claim 1 or 2 further comprising:
- determining a service associated with the data packet; and
- generating the functional indicator based on the service.

4. The method of one of claims 1 to 3 further comprising:
- determining a source address associated with the data packet; and
- generating the instance indicator based on at least a selected portion of the source address.

5. The method of one of claims 1 to 4 wherein generating the instance indicator comprises generating the instance indicator by performing a hash on at least a portion of the data in the data packet.

6. The method of one of claims 1 to 5 wherein generating the destination address comprises concatenating the functional indicator and the instance indicator to a prefix.

7. A device (60) for sending data packets over a communication network, the device comprising:
- an application module; and
- a controller (100) configured to execute the application module to:
- generate a functional indicator to identify a service,
- generate an instance indicator to identify an instance of the service,
- generate a destination address that is an IP address (10) comprising the functional indicator and the instance indicator, wherein the generated destination address provides location information for a networked device executing the service;
- insert the destination address into a data packet; and
- send the data packet towards the networked device by use of the generated destination address.

8. A device (60) for sending data packets over a communication network, the device comprising:
- an application module; and
- a controller (100) configured to execute the application module to:
- generate a functional indicator to identify a service,
- generate an instance indicator to identify an instance of the service,
- generate a destination address that is a MAC address (30) comprising the functional indicator and the instance indicator, wherein the generated destination address provides location information for a networked device executing the service;
- insert the destination address into a data packet; and
- send the data packet towards the networked device by use of the generated destination address.

9. The device of claim 7 or 8 wherein the controller is further configured to determine a service associated with the data packet, and to generate the functional indicator based on the service.

10. The device of one of claims 7 to 9 wherein the controller is further configured to determine a source address associated with the data packet, and to generate the instance indicator based on at least a selected portion of the source address.

11. The device of one of claims 7 to 10 wherein the controller is further configured to perform a hash on at least a portion of the data in the data packet to generate the instance indicator.

## Patentansprüche

1. Verfahren zum Senden von Datenpaketen über ein Kommunikationsnetzwerk, wobei das Verfahren folgende Schritte umfasst:
- Generieren (84) eines Funktionsindikators, um einen Dienst zu identifizieren,
- Generieren (86) eines Instanzindikators, um eine Instanz des Dienstes zu identifizieren,
- Generieren einer Zieladresse, die eine Internet-Protokoll- (IP) Adresse (10) ist, die den Funktionsindikator und den Instanzindikator umfasst, wobei die generierte Zieladresse Positionsinformationen für eine vernetzte Vorrichtung bereitstellt, die den Dienst ausführt;
- Einfügen (90) der Zieladresse in ein Datenpaket; und
- Senden (92) des Datenpakets an die vernetzte Vorrichtung unter Verwendung der generierten Zieladresse.

2. Verfahren zum Senden von Datenpaketen über ein Kommunikationsnetzwerk, wobei das Verfahren folgende Schritte umfasst:
- Generieren (84) eines Funktionsindikators, um einen Dienst zu identifizieren,
- Generieren (86) eines Instanzindikators, um eine Instanz des Dienstes zu identifizieren,
- Generieren (88) einer Zieladresse, die eine Medienzugriffssteuerungs- (MAC) Adresse (30) ist, die den Funktionsindikator und den Instanzindikator umfasst, wobei die generierte Zieladresse Positionsinformationen für eine vernetzte Vorrichtung bereitstellt, die den Dienst ausführt;
- Einfügen (90) der Zieladresse in ein Datenpaket; und
- Senden (92) des Datenpakets an die vernetzte Vorrichtung unter Verwendung der generierten Zieladresse.

3. Verfahren nach Anspruch 1 oder 2, ferner umfassend folgende Schritte:
- Bestimmen eines Dienstes, der mit dem Datenpaket verknüpft ist; und
- Generieren des Funktionsindikators basierend auf dem Dienst.

4. Verfahren nach einem der Ansprüche 1 bis 3, ferner umfassend folgende Schritte:
- Bestimmen einer Quelladresse, die mit dem Datenpaket verknüpft ist; und
- Generieren des Instanzindikators basierend mindestens auf einem ausgewählten Teil der Quelladresse.

5. Verfahren nach einem der Ansprüche 1 bis 4, wobei das Generieren des Instanzindikators das Generieren des Instanzindikators durch das Ausführen einer Hash-Funktion an mindestens einem Teil der Daten in dem Datenpaket umfasst.

6. Verfahren nach einem der Ansprüche 1 bis 5, wobei das Generieren der Zieladresse das Verketten des Funktionsindikators und des Instanzindikators mit einem Präfix umfasst.

7. Vorrichtung (60) zum Senden von Datenpaketen über ein Kommunikationsnetzwerk, wobei die Vorrichtung Folgendes umfasst:
- ein Anwendungsmodul; und
- einen Controller (100), der konfiguriert ist, um das Anwendungsmodul auszuführen zum:
- Generieren eines Funktionsindikators, um einen Dienst zu identifizieren,
- Generieren eines Instanzindikators, um eine Instanz des Dienstes zu identifizieren,
- Generieren einer Zieladresse, die eine IP-Adresse (10) ist, die den Funktionsindikator und den Instanzindikator umfasst, wobei die generierte Zieladresse Positionsinformationen für eine vernetzte Vorrichtung bereitstellt, die den Dienst ausführt;
- Einfügen der Zieladresse in ein Datenpaket; und
- Senden des Datenpakets an die vernetzte Vorrichtung unter Verwendung der generierten Zieladresse.

8. Vorrichtung (60) zum Senden von Datenpaketen über ein Kommunikationsnetzwerk, wobei die Vorrichtung Folgendes umfasst:
- ein Anwendungsmodul; und
- einen Controller (100), der konfiguriert ist, um das Anwendungsmodul auszuführen zum:
- Generieren eines Funktionsindikators, um einen Dienst zu identifizieren,
- Generieren eines Instanzindikators, um eine Instanz des Dienstes zu identifizieren,
- Generieren einer Zieladresse, die eine MAC-Adresse (30) ist, die den Funktionsindikator und den Instanzindikator umfasst, wobei die generierte Zieladresse Positionsinformationen für eine vernetzte Vorrichtung bereitstellt, die den Dienst ausführt;
- Einfügen der Zieladresse in ein Datenpaket; und
- Senden des Datenpakets an die vernetzte Vorrichtung unter Verwendung der generierten Zieladresse.

9. Vorrichtung nach Anspruch 7 oder 8, wobei der Controller ferner konfiguriert ist, um einen Dienst zu bestimmen, der mit dem Datenpaket verknüpft ist, und um den Funktionsindikator basierend auf dem Dienst zu generieren.

10. Verfahren nach einem der Ansprüche 7 bis 9, wobei der Controller ferner konfiguriert ist, um eine Quelladresse zu bestimmen, die mit dem Datenpaket verknüpft ist, und um den Instanzindikator basierend mindestens auf einem ausgewählten Teil der Quelladresse zu generieren.

11. Verfahren nach einem der Ansprüche 7 bis 10, wobei der Controller ferner konfiguriert ist, um eine Hash-Funktion an mindestens einem Teil der Daten in dem Datenpaket auszuführen, um den Instanzindikator zu generieren.

## Revendications

1. Procédé d'envoi de paquets de données sur un réseau de communication, le procédé comprenant les étapes consistant à :
- produire (84) un indicateur fonctionnel pour identifier un service ;
- produire (86) un indicateur d'instance pour identifier une instance du service ;
- produire une adresse de destination qui est une adresse du protocole internet, IP, (10), qui comprend l'indicateur fonctionnel et l'indicateur d'instance, dans lequel l'adresse de destination produite fournit des informations de localisation pour un dispositif en réseau qui exécute le service ;
- insérer (90) l'adresse de destination dans un paquet de données ; et
- envoyer (92) le paquet de données vers le dispositif en réseau, en utilisant l'adresse de destination produite.

2. Procédé d'envoi de paquets de données sur un réseau de communication, le procédé comprenant les étapes consistant à :
- produire (84) un indicateur fonctionnel pour identifier un service ;
- produire (86) un indicateur d'instance pour identifier une instance du service ;
- produire une adresse de destination qui est une adresse de commande d'accès au support, MAC pour « *Media Access Control* », (30), qui comprend l'indicateur fonctionnel et l'indicateur d'instance, dans lequel l'adresse de destination produite fournit des informations de localisation pour un dispositif en réseau qui exécute le service ;
- insérer (90) l'adresse de destination dans un paquet de données ; et
- envoyer (92) le paquet de données vers le dispositif en réseau, en utilisant l'adresse de destination produite.

3. Procédé selon la revendication 1 ou 2, comprenant en outre les étapes consistant à :
- déterminer un service associé au paquet de données ; et
- produire l'indicateur fonctionnel d'après le service.

4. Procédé selon l'une quelconque des revendications 1 à 3, comprenant en outre les étapes consistant à :
- déterminer une adresse de source associée au paquet de données ; et
- produire l'indicateur d'instance en fonction d'au moins une partie sélectionnée de l'adresse de source.

5. Procédé selon l'une quelconque des revendications 1 à 4, dans lequel l'étape de production de l'indicateur d'instance comprend l'étape consistant à produire l'indicateur d'instance en effectuant un hachage sur au moins une partie des données dans le paquet de données.

6. Procédé selon l'une quelconque des revendications 1 à 5, dans lequel l'étape de production de l'adresse de destination comprend l'étape consistant à concaténer l'indicateur fonctionnel et l'indicateur d'instance à un préfixe.

7. Dispositif (60) destiné à envoyer des paquets de données sur un télécommunication, le dispositif comprenant :
- un module applicatif ; et
- un contrôleur (100) configuré pour exécuter le module applicatif afin de :
- produire un indicateur fonctionnel pour identifier un service ;
- produire un indicateur d'instance pour identifier une instance du service ;
- produire une adresse de destination qui est une adresse IP (10) qui comprend l'indicateur fonctionnel et l'indicateur d'instance, dans lequel l'adresse de destination produite fournit des informations de localisation pour un dispositif en réseau qui exécute le service ;
- insérer l'adresse de destination dans un paquet de données ; et
- envoyer le paquet de données vers le dispositif en réseau, en utilisant l'adresse de destination produite.

8. Dispositif (60) destiné à envoyer des paquets de données sur un télécommunication, le dispositif comprenant :
- un module applicatif ; et
- un contrôleur (100) configuré pour exécuter le module applicatif afin de :
- produire un indicateur fonctionnel pour identifier un service ;
- produire un indicateur d'instance pour identifier une instance du service ;
- produire une adresse de destination qui est une adresse MAC (30) qui comprend l'indicateur fonctionnel et l'indicateur d'instance, dans lequel l'adresse de destination produite fournit des informations de localisation pour un dispositif en réseau qui exécute le service ;
- insérer l'adresse de destination dans un paquet de données ; et
- envoyer le paquet de données vers le dispositif en réseau, en utilisant l'adresse de destination produite.

9. Dispositif selon la revendication 7 ou 8, dans lequel le contrôleur est en outre configuré pour déterminer un service associé au paquet de données et pour produire l'indicateur fonctionnel d'après le service.

10. Dispositif selon l'une quelconque des revendications 7 à 9, dans lequel le contrôleur est en outre configuré pour déterminer une adresse de source associée au paquet de données et pour produire l'indicateur d'instance en fonction d'au moins une partie sélectionnée de l'adresse de source.

11. Dispositif selon l'une quelconque des revendications 7 à 10, dans lequel le contrôleur est en outre configuré pour produire l'indicateur d'instance en effectuant un hachage sur au moins une partie des données dans le paquet de données.
